(19) **Europäisches Patentamt European Patent Office Office européen des brevets**

(11) **EP 2 799 599 B1**

(12) **EUROPEAN PATENT SPECIFICATION**

(45) Date of publication and mention of the grant of the patent:
**10.07.2019 Bulletin 2019/28**

(21) Application number: **12862423.6**

(22) Date of filing: **27.12.2012**

(51) Int Cl.:
*D01F 6/62* (2006.01)     *D01D 5/08* (2006.01)
*D02J 1/22* (2006.01)     *D02G 3/48* (2006.01)
*D02G 3/02* (2006.01)     *B29K 67/00* (2006.01)
*D01D 10/02* (2006.01)

(86) International application number:
**PCT/KR2012/011605**

(87) International publication number:
**WO 2013/100647 (04.07.2013 Gazette 2013/27)**

(54) **DRAWN POLYETHYLENE TEREPHTHALATE FIBER, POLYETHYLENE TEREPHTHALATE TYRE CORD AND METHOD FOR PRODUCING SAME**

GEZOGENE POLYETHYLENTEREPHTHALAT-FASER, REIFENKORD AUS POLYETHYLENTEREPHTHALAT UND HERSTELLUNGSVERFAHREN DAFÜR

FIBRE ÉTIRÉE EN POLYÉTHYLÈNE TÉRÉPHTALATE, CÂBLÉ POUR PNEUMATIQUE EN POLYÉTHYLÈNE TÉRÉPHTALATE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2011 KR 20110147560**
          **27.09.2012 KR 20120108186**
          **20.12.2012 KR 20120154106**

(43) Date of publication of application:
**05.11.2014 Bulletin 2014/45**

(73) Proprietor: **Kolon Industries, Inc.**
**Seoul 07793 (KR)**

(72) Inventors:
• **PARK, Sung-Ho**
**Daejeon 301-150 (KR)**

• **JEON, Ok-Hwa**
**Gyeongsan-si**
**Gyeongsangbuk-do 712-903 (KR)**
• **CHUNG, Il**
**Daegu 706-020 (KR)**
• **KIM, Gi-Woong**
**Daegu 706-020 (KR)**

(74) Representative: **Ter Meer Steinmeister & Partner Patentanwälte mbB**
**Nymphenburger Straße 4**
**80335 München (DE)**

(56) References cited:
**JP-B2- 2 907 912      KR-A- 20080 112 161**
**KR-A- 20090 104 746      KR-A- 20090 104 747**
**KR-A- 20110 078 773      US-A- 5 558 935**
**US-A- 5 939 516      US-A1- 2011 024 013**
**US-A1- 2011 024 016      US-B2- 6 582 817**

**Description**

## BACKGROUND OF THE INVENTION

**(a) Field of the Invention**

The present invention relates to a poly(ethyleneterephthalate) drawn fiber, which is able to provide a poly(ethylene terephthalate) tire-cord showing superior strength and dimensional stability without a PCI process after tire vulcanization, a poly(ethylene terephthalate) tire-cord, and a manufacturing method thereof.

**(b) Description of the Related Art**

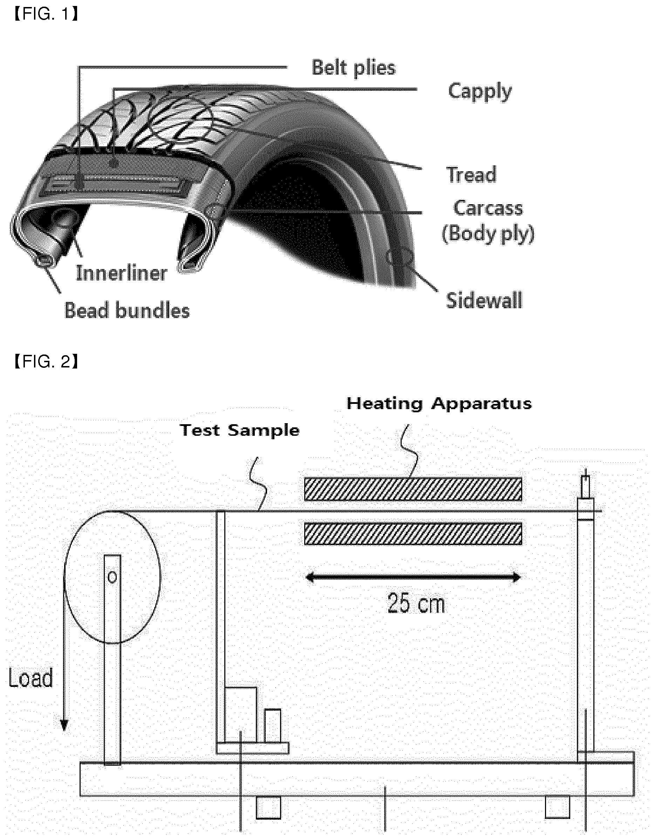

A tire is a complex body of fiber/steel/rubber, and generally has a structure as illustrated in FIG. 1. Herein, a body ply, also called carcass, is a reinforcing cord layer inside the tire, and supports the entire load of the vehicle, maintains the tire shape, and withstands against a shock, and is required to have high fatigue resistance against bending and stretching movement during driving. Therefore, a tire-cord for the body ply is required to have excellent dimensional stability together with superior strength for supporting a large load, and synthetic fiber cords such as polyesters or the like have been used generally.

The synthetic fiber cord has high tenacity to greatly contribute to the durability improvement of the tire. However, it has a disadvantage of reducing elasticity and dimensional stability of the tire after vulcanization due to its high heat shrinkage ratio. In order to make up for this disadvantage, an additional process such PCI (Post Cure Inflation) has been applied to improve the dimensional stability of the tire after vulcanization thereof. However, such PCI process is one of the major factors causing a productivity reduction in the tire manufacturing process, and tire deformation occurs during the PCI process, causing a reduction in quality or occurrence of defects.

Recently, an ultra high-speed spinning technique was employed in the manufacturing process of tire-cord, and thus it is possible to manufacture a polyester tire-cord having high modulus low shrinkage (HMLS) properties and superior dimensional stability.

When the ultra high-speed spinning technique is employed, an undrawn fiber having high crystallinity should be used. Since this undrawn fiber has a relatively narrow region to be drawn, non-uniform drawing or breakage due to friction easily occurs when the ultra high-speed spinning technique is employed. Moreover, if the drawing ratio is lowered in order to prevent the non-uniform drawing, it is difficult to achieve sufficient mechanical properties of the drawn fiber and tire-cord, such as strength. For this reason, there is a limitation in the application of the ultra high-speed spinning technique. In particular, it is also difficult to achieve sufficient dimensional stability when the ultra high-speed spinning technique is employed.

Due to the above described technical limitations, high dimensional stability of the tire-cord has not been sufficiently achieved yet, and thus the PCI process is still required in the tire manufacturing process, which is still a major factor causing a reduction in productivity or quality of tire.

## SUMMARY OF THE INVENTION

The present invention provides a poly(ethyleneterephthalate) drawn fiber, which is able to provide a poly(ethylene terephthalate) tire-cord showing superior strength and dimensional stability even though a PCI process is omitted after tire vulcanization, and a manufacturing method thereof.

Further, the present invention provides a poly(ethylene terephthalate) tire-cord, which shows superior strength and dimensional stability without a PCI process, thereby being suitably used in the cord for body ply, and a manufacturing method thereof.

The present invention provides a poly(ethyleneterephthalate) drawn fiber comprising a polymer including 90 mol% or more of poly(ethyleneterephthalate), and having a melt viscosity of 320 to 450 Pa·s (3200 to 4500 poise) at 290°C at a shear rate of 1000 s$^{-1}$,

wherein the poly(ethyleneterephthalate) drawn fiber has a total fineness of 1111.11 to 4444.44 dtex (1000 to 4000 denier), and a monofilament fineness of 2 to 3.89 dtex (1.8 to 3.5 denier),

wherein its tensile strength is 6.3 g/dtex (7.0 g/d) or more, its intermediate elongation is 4.0 to 6.5%, its breaking elongation is 10.0 to 20.0% under a load of 4.05 g/dtex (4.5 g/d),

wherein its L/S value defined as the following Equation is 2.1 kg/% to 3.5 kg/% after heat treatment at a temperature of 180°C under an initial load of 0.018 g/dtex (0.02 g/d) for 2 minutes:

[Equation 1] ¶

L/S = LASE (kg)/shrinkage rate (%) ¶

wherein LASE (kg) represents Load at Specific Elongation when elongation of the drawn fiber is 5%, after heat treatment for 2 minutes, and shrinkage rate (%) represents a dry heat shrinkage rate measured while the drawn fiber is maintained at the temperature of 180°C without the initial load, after heat treatment for 2 minutes.

Further, the present invention provides a method for manufacturing the poly(ethyleneterephthalate) drawn fiber, including the steps of: melt-spinning a polymer including 90 mol% or more of poly(ethyleneterephthalate) and having a melt viscosity of 320 to 450 Pa·s (3200 to 4500 poise) at 290°C and at a shear rate of 1000 $s^{-1}$, through a spinneret having a spinneret hole area 0.16 to 0.36 $mm^2$/dtex (0.18 to 0.4 $mm^2$/De) at a speed of 3000 to 4000 m/min so as to produce an undrawn fiber; and drawing the undrawn fiber with a drawing ratio of 1.5 to 1.8 times.

Further, the present invention provides a poly(ethyleneterephthalate) tire-cord having a PCI index of 0.3% to 1.3%, in which the PCI index is defined as a difference between a dry heat shrinkage rate after heat treatment at 180°C for 2 minutes under a load of 0.01 g/d and a dry heat shrinkage rate after heat treatment at 180°C for 2 minutes under a load of 0.09 g/dtex (0.1 g/d)

Further, the present invention provides a method for manufacturing the poly(ethyleneterephthalate) tire-cord, including the steps of producing a poly(ethyleneterephthalate) drawn fiber by the above described method; twisting the drawn fibers; and dipping the twisted fibers in an adhesive solution, followed by heat treatment.

Hereinafter, a poly(ethyleneterephthalate) drawn fiber, a poly(ethyleneterephthalate) tire-cord, and a manufacturing method thereof will be described according to the specific embodiments of the present invention.

In addition, the term 'include' or 'comprise' means that it includes a particular component (or particular element) without particular limitations unless otherwise mentioned in the present entire disclosure, and it cannot be interpreted as it excludes the addition of the other components.

The poly(ethyleneterephthalate) (hereinafter, referred to as 'PET') tire-cord may be produced by melt-spinning a polymer PET to produce an undrawn fiber, drawing the undrawn fiber to obtain a PET drawn fiber, twisting the PET drawn fibers, and dipping them into the adhesive to produce the PET tire cord in a dip cord type. Therefore, the properties of the undrawn fiber produced by the melt-spinning of the PET and the drawn fiber produced by drawing the same are directly or indirectly reflected to the properties of the PET tire cord.

The present inventors have made many studies on the drawn fiber for tire-cord, and they found that the melt-spinning conditions such as melt viscosity of the polymer at the temperature corresponding to the melt-spinning temperature and the spinneret hole area of the spinneret are optimized while an ultra high-speed spinning technique is employed, so as to manufacture a PET drawn fiber and a tire-cord having superior strength and dimensional stability without PCI process, thereby completing the present invention. More specific descriptions thereof are the same as follows.

Previously, the present inventors revealed that the ultra high-speed spinning technique is applied to the PET polymer having high viscosity to cause an oriented crystallization phenomenon of the PET polymer as described below, thereby manufacturing and providing a PET drawn fiber and a tire-cord having superior dimensional stability or the like, and they applied Korean Patent Application No. 2007-0060370, etc. In this regard, it is assumed that the PET drawn fiber and the tire-cord having superior dimensional stability can be provided through the ultra high-speed spinning technique, because oriented crystallization phenomenon of the PET polymer occurs due to high spinning draft during the melt-spinning process and thus the PET undrawn fiber and the drawn fiber having high crystallinity and low amorphous orientation factor can be obtained.

However, the results of continuous experiments of the present inventors showed that the melt-spinning conditions such as melt viscosity of the polymer at the melt-spinning temperature and the spinneret hole area of the spinneret as well as the spinning speed applied to the ultra high-speed spinning technique greatly affect the high spinning draft and occurrence of oriented crystallization phenomenon of the optimized PET polymer. More specifically, it was revealed that high spinning draft can be more effectively achieved and oriented crystallization phenomenon of the PET polymer may more preferably occur by using a PET polymer having a melt viscosity of approximately 3000 to 5000 poise at approximately 290°C corresponding to the melt-spinning conditions and at a shear rate of approximately 1000 $s^{-1}$, and employing a spinneret having a spinneret hole area of approximately 0.16 to 0.36 $mm^2$/dtex (0.18 to 0.4 $mm^2$/De), while applying a high spinning speed of approximately 3000 to 4000 m/min. Therefore, a PET drawn fiber and a tire-cord having superior dimensional stability and mechanical properties such as strength or the like can be provided by controlling such conditions, and the PCI process can be omitted.

Further, as the process conditions such as the above described specific ranges of the melt viscosity and the spinneret hole area are applied, advantages of the ultra high-speed spinning technique are brought out as much as possible so as to achieve a PET drawn fiber and a tire-cord having superior dimensional stability and strength, and also to minimize a reduction in physical properties or performances during the manufacturing process, such as non-uniform cooling, a reduction in strength due to smaller diameter of monofilament or deterioration in fatigue performance of the tire-cord.

Therefore, the present inventors revealed that a PET drawn fiber and a tire-cord having superior strength and dimensional stability can be manufactured and provided through optimization of the above described melt-spinning conditions or the like, even though the PCI process is omitted after tire vulcanization, thereby completing the present invention.

According to one embodiment of the present invention, a PET drawn fiber having novel physical properties that can be manufactured and provided by application of the above described melt-spinning conditions is finally provided. The PET drawn fiber comprises a polymer including 90 mol% or more of poly(ethyleneterephthalate), and having a melt viscosity of 320 to 450 Pa·s (3200 to 4500 poise) at 290°C at a shear rate of 1000 s$^{-1}$,

wherein the poly(ethyleneterephthalate) drawn fiber has a total fineness of 1111.11 to 4444.44 dtex (1000 to 4000 denier), and a monofilament fineness of 2 to 3.89 dtex (1.8 to 3.5 denier),

wherein its tensile strength is 6.3 g/dtex (7.0 g/d) or more, its intermediate elongation is 4.0 to 6.5%, its breaking elongation is 10.0 to 20.0% under a load of 4.05 g/dtex (4.5 g/ d),

wherein its L/S value defined as the following Equation is 2.1 kg/ % to 3.5 kg/% after heat treatment at a temperature of 180°C under an initial load of 0.018 g/dtex (0.02 g/d) for 2 minutes:


[Equation 1]

L/S = LASE (kg)/shrinkage rate (%)


wherein LASE (kg) represents Load at Specific Elongation when elongation of the drawn fiber is 5%, after heat treatment for 2 minutes, and shrinkage rate (%) represents a dry heat shrinkage rate measured while the drawn fiber is maintained at the temperature of 180°C without the initial load, after heat treatment for 2 minutes.

The PET drawn fiber of one embodiment shows property of the L/S value of approximately 2.0 kg/% or more, or approximately 2.1 to 3.5 kg/% because the shrinkage rate after heat treatment is low and the load applied to the PET drawn fiber is relatively high at an elongation of approximately 5%. The PET drawn fiber has low shrinkage rate and high load for elongation under heat treatment conditions corresponding to tire vulcanization, thereby showing excellent dimensional stability. In particular, the PET drawn fiber and the tire-cord obtained therefrom are able to show excellent dimensional stability after tire vulcanization, without applying an additional process such as PCI process.

Further, the PET drawn fiber of one embodiment shows properties of a tensile strength of is 6.3 g/dtex (7.0 g/d) or more, or 6.75 to 8.1 or 6.93 to 7.78 g/dtex (7.5 to 9.0 g/d or 7.7 to 8.65 g/d), an intermediate elongation of approximately 4.0 to 6.5%, or approximately 4.5 to 6.0%, a breaking elongation of approximately 10.0 to 20.0%, or approximately 10.5 to 18.0%, or approximately 11.0 to 15.0% under a load of 4.05 g/dtex (4.5 g/d), a coefficient of variation(C.V%) of approximately 7% or less, or approximately 4.0 to 6.8%, or approximately 5.5 to 6.7%. Therefore, the PET drawn fiber shows physical properties such as excellent and uniform strength, dimensional stability or the like, and owing to these excellent physical properties of the drawn fiber, a tire-cord showing both excellent strength and dimensional stability can be manufactured.

Meanwhile, according to another embodiment of the present invention, a method for manufacturing the above described PET drawn fiber is provided. The manufacturing method of the PET drawn fiber may include the steps of melt-spinning a polymer including 90 mol% or more of poly(ethyleneterephthalate) and having a melt viscosity of 320 to 450 Pa·s (3200 to 4500 poise) at 290°C at a shear rate of 1000 s$^{-1}$, through a spinneret having a hole area of 0.21 to 0.32 mm$^2$/dtex (0.23 to 0.35 mm$^2$/De) at a speed of 3000 to 4000 m/min so as to produce an undrawn fiber; and drawing the undrawn fiber with a drawing ratio of 1.5 to 1.8 times, and wherein a drawn fiber having a monofilament fineness of 2 to 3.89 dtex (1.8 to 3.5 denier) is produced in the drawing step.

In the manufacturing method of another embodiment, the ultra high-speed spinning technique is applied at a high spinning speed of approximately 3000 to 4000 m/min, the PET polymer having a high melt viscosity under melt-spinning conditions is used, and a spinneret having a specific spinneret hole area is used to carry out the melt-spinning process so as to manufacture the PET undrawn fiber, and then the PET drawn fiber is manufactured therefrom.

As described above, as the melt-spinning process is carried out under such specific conditions, the spinning draft during the melt-spinning can be more effectively increased, and oriented crystallization phenomenon of the PET polymer is optimized to bring out advantages of the ultra high-speed spinning technique as much as possible, and thus a PET drawn fiber and a tire-cord having superior dimensional stability and mechanical properties can be obtained. Further, a reduction in physical properties or performances during the manufacturing process can be minimized by controlling the melt-spinning conditions such as melt viscosity, spinneret hole area or the like within the specific range.

Therefore, according to the manufacturing method of another embodiment, the PET drawn fiber of one embodiment for providing the PET tire-cord showing superior strength and dimensional stability can be manufactured, although the PCI process is omitted.

Hereinafter, each step of the manufacturing method of the PET drawn fiber according another embodiment will be described in detail.

In the method for manufacturing the PET drawn fiber according to another embodiment, melt-spinning of a polymer including PET is first performed so as to produce an undrawn fiber. In this regard, the polymer including PET may include various additives, and according to another embodiment, a polymer having a PET content of 90 mol% or more may be used. This polymer is used to manufacture a drawn fiber and a tire-cord having excellent physical properties described below.

Further, the PET polymer may have a melt viscosity of 320 to 450 Pa·s (3200 to 4500 poise) at 290°C and at a shear rate of approximately 1000 s$^{-1}$. This melt viscosity can be measured using a rheometer of RHEO-TESTER 2000. In the above melt viscosity range, the measurement conditions of the temperature of approximately 290°C and the shear rate of approximately 1000 s$^{-1}$ correspond to the conditions under which the melt-spinning process is practically carried out. As the PET polymer having high melt viscosity under such conditions is used, advantages of the ultra high-speed spinning technique can be more effectively achieved. As a result, a PET drawn fiber and a tire-cord having superior mechanical properties such as strength or the like can be obtained by the above manufacturing method.

However, in order to prevent breakage due to an excessively increased discharge pressure of a pack upon spinning, it is preferable that a polymer having a melt viscosity of 450 Pa·s (4500 poise) or less is used in the melt spinning under the above conditions. That is, if the melt viscosity of the PET polymer is too high, it is difficult to discharge the polymer upon melt-spinning, leading to deterioration in spinnability. In order to solve these problems, the spinning temperature can be increased, but it is difficult to manufacture the drawn fiber and the tire-cord having superior strength and dimensional stability due to thermal degradation. On the contrary, when a polymer having an excessively low melt viscosity is used, sufficient polymer discharge pressure is not secured, and thus it is difficult to bring out the advantages of the ultra high-speed spinning technique and to manufacture the tire-cord having high strength, dimensional stability or the like.

In the above described manufacturing method, the ultra high-speed spinning technique is applied to the polymer having high melt viscosity so as to obtain an undrawn fiber having high crystallinity or the like, and through a subsequent process, the drawn fiber and the tire-cord having excellent strength and dimensional stability can be manufactured. In order to achieve high crystallinity or the like of the undrawn fiber, melt-spinning of the polymer can be carried out at a spinning speed of approximately 3000 to 4000 m/min, or approximately 3500 to 4000 m/min. That is, in order to achieve physical properties such as high crystallinity or productivity of the undrawn fiber, it is preferable that the spinning speed of 3000 m/min or higher is applied, and in order to provide a minimum cooling time and high strength required for the production of the undrawn fiber, it is preferable that the spinning speed of 4000 m/min or lower is applied under the limited winding speed.

Further, in the manufacturing method of another embodiment, the above described melt-spinning process can be carried out through a spinneret having a spinneret hole area of 0.16 to 0.36 mm$^2$/dtex (0.18 to 0.4 mm$^2$/De) or 0.21 to 0.32 mm$^2$/dtex (0.23 to 0.35 mm$^2$/De) As the spinneret having such spinneret hole area is used, the discharge speed of the polymer and a speed difference of rolls in the subsequent drawing process are controlled to more effectively control the spinning draft. As a result, the oriented crystallization phenomenon of the PET polymer due to application of the ultra high-speed spinning technique can be more effectively generated, thereby manufacturing the PET drawn fiber and the tire-cord having superior strength, dimensional stability or the like.

Furthermore, a discharge pressure of a pack upon spinning can be properly controlled by controlling the spinneret hole area so as to greatly reduce the problems due to the increased discharge pressure and to overcome a limitation in the application of the drawing ratio, considerably. Previously, when an undrawn fiber was intended to be obtained from a polymer having high viscosity by the ultra high-speed spinning technique, breakage or hairiness may occur due to increased discharge pressure of a pack upon spinning or elastic properties, and as a result, there was a limitation in the application of the polymer having high viscosity. Furthermore, there is a disadvantage that the strength of the drawn fiber and the tire cord is lowered because the restricted drawing ratio is applied. For this reason, although high viscosity and ultra high-speed spinning technique are applied, it is difficult to obtain a tire-cord having excellent strength and dimensional stability. In contrast, when the spinneret having the particular spinneret hole area described above is applied, a loss in the physical properties or performances can be minimized, and a PET drawn fiber and a tire-cord having superior dimensional stability and strength can be manufactured.

However, if a spinneret having an excessively large spinneret hole area above 0.36 mm$^2$/dtex (0.4 mm$^2$/De) is applied, non-uniform cooling, a difference in the strength due to the reduced diameter of monofilaments, or deterioration of fatigue performance upon manufacturing the tire-cord may be caused.

In the above described melt-spinning process, the discharge pressure of the polymer passed through the spinneret can be controlled to 10.34 MPa to 20.69 MPa (1500 to 3000 psi), or 11.72 MPa to 19.31 MPa (1700 to 2800 psi). Such discharge pressure can be controlled by controlling the spinneret hole area of the spinneret or viscosity of the polymer described above, or scale or design of the spinneret. When the polymer discharge pressure upon melt-spinning is controlled within the above described proper range, the PET polymer is stably discharged upon melt-spinning, and the spinning draft is more effectively increased to further maximize the advantages of ultra high-speed spinning technique. As a result, it is possible to provide a PET drawn fiber and a tire-cord having more improved dimensional stability, strength or the like. However, if the discharge pressure is too high, operation becomes unstable due to leakage of the pack, or an excessive increase in the spinning draft may cause deterioration of physical properties, non-uniformity, furthermore, breakage of the drawn fiber.

Meanwhile, in the manufacturing method of another embodiment, a drawn fiber can be produced to have a monofilament fineness of 2.0 to 3.9 dtex (1.8 to 3.5 denier), or 2.0 to 3.3 dtex (1.8 to 3.0 denier) through the spinneret having the above described spinneret hole area. Therefore, the initial discharge speed of the polymer in the spinneret can be reduced, the orientation of the undrawn fiber is further improved, and the spinning draft is more effectively increased to further improve the dimensional stability of the manufactured drawn fiber and tire-cord. In addition, more uniform and efficient cooling is possible due to the high monofilament fineness, and as a result, a reduction in the physical properties of the drawn fiber and the tire-cord can be reduced, and the drawn fiber and the tire-cord having a uniform cross-sectional area and physical properties can be provided. Therefore, according to application of the ultra high-speed spinning technique, excellent physical properties can be optimized and achieved. In particular, for example, when a drawn fiber and a tire-cord having high fineness of 1111.1 dtex (1000 denier) or more are manufactured, it is also possible to provide a tire-cord having physical properties such as uniform and excellent strength, dimensional stability or the like.

If the monofilament fineness becomes 2.0 dtex (1.8 denier) or less during the spinning process, the excessively low monofilament fineness increases the fiber entanglement due to air during spinning, thereby increasing the possibility of hairiness. In addition, breakage of the filament may easily occur due to post-processing which provides a twist and a breakage may easily occur due to repeated fatigue and fatigue resistance may be decreased. In addition, in order to provide the product discharged through the spinneret with the uniform cooling by the cooling air and to improve the dimensional stability due to increased spinning draft by reducing the discharge speed of the polymer, the monofilament fineness is 3.9 dtex (3.5 denier) or less.

Meanwhile, in the above melting-spinning step, a predetermined PET polymer is discharged through the spinneret as described above, and then passed through a warming section of approximately 60 to 120 mm and a quenching section, and melt-spun with the above described speed of approximately 3000 to 4000 m/min.

In the process of manufacturing the undrawn fiber by melt-spinning and cooling the PET polymer under the above described conditions, cooling may be carried out by supplying cooling air of approximately 15 to 60°C. The supply of the cooling air is preferably controlled at approximately 0.4 to 1.5 m/s under the cooling air temperature conditions.

The undrawn fiber manufactured by the above process may show high crystallinity up to approximately 40% and low amorphous orientation factor up to approximately 0.07. As the undrawn fiber having these crystalline properties is obtained through the above described melt-spinning process, and then the drawn fiber and the tire-cord are manufactured, the tire-cord showing superior strength and dimensional stability can be manufactured. The technical principle can be inferred as follows.

Basically, the PET polymer constituting the undrawn fiber has a partially crystallized structure, and is composed of crystalline regions and amorphous regions. However, the degree of crystallization of the undrawn fiber obtained under the controlled melt-spinning conditions is higher than that of the known undrawn fiber because of the oriented crystallization phenomenon. Due to such high crystallinity, the drawn fiber and the tire cord prepared from the undrawn fiber can show superior mechanical properties and dimensional stability.

At the same time, the undrawn fiber may show the amorphous orientation factor which is largely lower than that of the known undrawn fiber. The amorphous orientation factor means the degree of orientation of the chains included in the amorphous region of the undrawn fiber, and it has low value as the entanglement of the chains of the amorphous region increases. Generally, the drawn fiber and the tire-cord manufactured from the undrawn fiber show low shrinkage stress as well as low shrinkage rate, because the degree of disorder increases as the amorphous orientation factor decreases and the chains of the amorphous region becomes not a strained structure but a relaxed structure. However, the undrawn fiber obtained under the above described melt-spinning conditions includes more cross-linking bonds per a unit volume, because the molecular chains constituting the undrawn fiber slip during the spinning process and form a fine network structure. On this account, the undrawn fiber may become the structure of which the chains of the amorphous region are strained in spite of the lower amorphous orientation factor, and thus it shows developed crystalline structure and superior orientation characteristics due to this. Therefore, the undrawn fiber as well as the drawn fiber and the tire-cord manufactured therefrom are able to show low shrinkage rate and high shrinkage stress and modulus, and as a result, the tire cord showing superior dimensional stability can be manufactured.

Furthermore, the above physical properties according to application of the ultra high-speed spinning technique can be more effectively achieved and maintained by controlling the spinneret hole area of the spinneret or the melt viscosity of the PET polymer measured under the specific conditions within the predetermined range, as described above. Therefore, according to one embodiment of the present invention, it is possible to provide a drawn fiber and a tire-cord having excellent strength and dimensional stability and uniform physical properties. Therefore, it is possible to manufacture a tire without application of the PCI process. Furthermore, when a drawn fiber and a tire-cord having high fineness are manufactured according to the recent requirements in the related art, excellent and uniform physical properties can be achieved, which greatly contributes to improvement in physical properties of the tire and simplification of the process.

Meanwhile, after production of the above described undrawn fiber, the undrawn fiber is drawn to produce the PET drawn fiber. The drawing step may be performed by Direct Spinning & Drawing (hereinafter, referred to as 'DSD') composed of a single consecutive process of spinning and drawing according to the typical production process of the drawn fiber.

Further, the drawing step is preferably performed at a drawing ratio of approximately 1.5 to 1.8 times, or approximately 1.55 to 1.75 times. That is, in order to produce the tire-cord having superior strength and dimensional stability, the drawing ratio is preferably approximately 1.5 times or more. However, if a high drawing ratio is applied, it is difficult to manufacture a tire-cord having excellent dimensional stability due to high orientation characteristics of the amorphous region. If the ultra high-speed spinning technique is applied at a spinning speed of approximately 3000 to 4000 m/min, there is a limitation in control of the drawing ratio according to a spinning machine. Further, the drawing ratio is preferably 1.8 or less because the crystallinity of the undrawn fiber may increase due to the fineness decrease of monofilament caused by the application of high-multi filament method.

The PET drawn fiber obtained by the above described preparation method may have a relatively high fineness of the total fineness of 1111.1 to 4444.4 dtex (1000 to 4000 denier) and also have the monofilament fineness of 2.0 to 3.9 dtex (1.8 to 3.5 denier). In particular, when the PET drawn fiber has such high fineness, it is able to exhibit excellent physical properties such as high tensile strength, intermediate elongation, breaking elongation or the like, as described above. Therefore, it meets the requirement in the art for the tire-cord having superior strength and dimensional stability as well as high fineness.

Meanwhile, according to another embodiment of the present invention, a method for manufacturing a PET tire-cord using the above described PET drawn fiber and the manufacturing thereof, and a manufacturing method thereof are provided. The method for manufacturing the PET tire-cord may include the steps of producing the PET drawn fiber by the above described method; twisting the drawn fibers to produce the twisted fibers; and dipping the twisted fiber in an adhesive solution, followed by heat treatment.

In the manufacturing method of the tire-cord, the twisting step may be, for example, carried out by 'Z' twisting the drawn fiber having a total fineness of 1111.1 to 4444.4 dtex (1000 to 4000 denier) with a twisting level of approximately 100 to 500 TPM (twist per meter), and 'S' twisting 1 to 3 ply of the 'Z' twisted fibers with a twisting level of approximately 100 to 500 TPM so as to prepare a twisted yarn having a total fineness of 2222.2 to 8888.9 dtex (2000 to 8000 denier)

Furthermore, an adhesive solution which is conventionally used for manufacturing a tire cord, for example, a resorcinol-formaldehyde-latex (RFL) adhesive solution, may be used as the adhesive solution. Further, the heat treatment process may be carried out at a temperature of approximately 220 to 260°C for approximately 90 to 360 seconds, preferably at a temperature of approximately 230 to 250°C for approximately 90 to 240 seconds, and more preferably at a temperature of approximately 235 to 250°C for approximately 90 to 180 seconds. Further, the heat treatment process may be carried out under a tension of approximately 0.1 kg/cord to 4.0 kg/cord. To provide the effect of Relax in the final heat treatment region, the process may be carried out under a tension of approximately 0.1 kg/cord to 2.0 kg/cord.

The tire-cord can be manufactured by the above method. However, the individual steps are only an example of the manufacturing method of the tire-cord, and it is apparent that steps typically performed in the art to which the present invention pertains may be further included prior to or after each step.

Meanwhile, according to another embodiment of the present invention, a PET tire-cord manufactured by the above described method is provided. The tire-cord may have a PCI index of approximately 1.5% or less, or approximately 0.3 to 1.3%, or approximately 0.6 to 1.2%, in which the PCI index is defined as a difference between a dry heat shrinkage rate after heat treatment at approximately 180°C for 2 minutes under a load of 0.009 g/dtex (0.01 g/d) and a dry heat shrinkage rate after heat treatment at approximately 180°C for 2 minutes under a load of 0.09 g/dtex (0.1 g/d). Further, its dry heat shrinkage rate after heat treatment at approximately 180°C for 2 minutes under a load of 0.009 g/dtex (0.01 g/d) may be approximately 1.5% or less, or approximately 0.2 to 1.5%, or approximately 0.5 to 1.5%, and its dry heat shrinkage rate after heat treatment at approximately 180°C for 2 minutes under a load of 0.09 g/dtex (0.1 g/d) may be approximately 1.0% or less, or approximately 0.1 to 1.0%, or approximately 0.2 to 1.0%. In addition, the tire-cord may be a tire-cord which can be used for manufacturing a tire without the PCI process after tire vulcanization.

In still another embodiment, such low PCI index indicates that a shrinkage rate difference is small although the load or temperature applied to the tire-cord is greatly changed, which reflects that excellent uniformity of the tire is maintained and the tire-cord exhibits excellent dimensional stability, after tire vulcanization performed under the predetermined load and temperature. These physical properties have never been achieved when the tire-cord was not subjected to the PCI process.

However, according to still another embodiment of the present invention, a tire-cord meeting the above described range of the PCI index can be provided, and therefore, the PCI process can be omitted after tire vulcanization. In other words, dimensional stability of the tire-cord is optimized without the PCI process, and thus the PCI process can be omitted. Therefore, since the tire-cord according to still another embodiment of the present invention is able to show excellent dimensional stability suitable for the body ply, the PCI process can be omitted, and a reduction in tire productivity due to the PCI process or a quality reduction due to omission of the PCI process can be prevented.

Meanwhile, the above described tire-cord according to still another embodiment may have a total fineness of 2222.2 to 8888.9 dtex (2000 to 8000 denier), a tensile strength of 8.1 to 15.3 g/dtex (9.0 to 17.0 g/d), or 9.9 to 14.4 g/dtex (11.0 to 16.0 g/d), an intermediate elongation of 3.0 to 5.5%, or 3.6 to 5.0%, and a breaking elongation of 10.0% or more, or 14.0 to 20.0% under a load of 2.025 g/dtex (2.25 g/d), That is, although the tire-cord has a high fineness of approximately 2222.2 dtex (2000 denier), or more, it is able to exhibit the optimized physical properties such as excellent tensile strength and elongation.

The above described PET tire-cord meets the requirement in the art for the tire-cord having excellent physical properties of high strength and excellent dimensional stability. In particular, the tire-cord can be very preferably used as a body ply cord for a pneumatic tire so as to very effectively support the vehicle's entire load. However, the use of the tire-cord is not limited thereto, and it is obvious that the tire-cord can be used in other applications such as cap ply.

According to the present invention, a tire-cord having superior dimensional stability and strength, and a manufacturing method thereof can be provided. This tire-cord is preferably used as body ply cord for a pneumatic tire so as to improve uniformity of the tire, and the PCI process can be omitted after tire vulcanization to further improve productivity.

## BRIEF DESCRIPTION OF THE DRAWINGS

FIG. 1 is a partial cut-away perspective view illustrating a structure of a general tire; and
FIG. 2 is a schematic view illustrating a structure of a shrinkage behavior tester used for measuring dry heat shrinkage rate.

## DETAILED DESCRIPTION OF THE EMBODIMENTS

Hereinafter, the preferred Examples are provided for better understanding. However, these Examples are for illustrative purposes only, and the invention is not intended to be limited by these Examples.

**[Preparation of drawn fiber]**

**Example 1**

A PET polymer having a melt viscosity of 320 Pa·s (3200 poise) at 290 °C and at a shear rate of 1000 s$^{-1}$ was used. At this time, the melt viscosity of the PET polymer was measured and confirmed using a rheometer of RHEO-TESTER 2000. The PET polymer having the melt viscosity was melt-spun through a spinneret having a spinneret hole area of 0.27 mm$^2$/dtex (0.3 mm$^2$/De) at a speed of 3500 m/min, and discharged at a discharge pressure of 12.4 MPa (1800 psi) This discharge pressure was examined by HMI program of Kolon Industries Inc. After the melt-spinning, the polymer was cooled to produce an undrawn fiber. This undrawn fiber was drawn at a drawing ratio of 1.67, followed by heat setting and winding so as to produce a PET drawn fiber having a monofilament fineness of 2.6.

The PET tire cord of Example 1 having a total fineness of 2000 denier was prepared by Z-twisting the drawn PET fibers of which the total fineness was 1000 denier with the twisting level of 410 TPM, S twisting 2 plies of the Z twisted fibers with the same twisting level, dipping and passing the same through an RFL adhesive solution, and drying and heat-treating the same.

The composition of the RFL adhesive solution and the conditions of the drying and the heat treatment followed the conventional conditions for treating a PET cord.

**Examples 2 to 5**

The PET drawn fibers and tire cords of Examples 2 to 5 were prepared substantially according to the same method as in Example 1, except that the melt viscosity of the PET polymer at 290°C and at a shear rate of 1000 s$^{-1}$, the spinneret hole area of the spinneret, the discharge pressure of the PET polymer from the spinneret, the spinning speed, the monofilament fineness, and the drawing ratio were changed in the preparation process of the PET drawn fiber as in the following Table 1.

**Comparative Examples 1 to 3**

The PET drawn fibers and tire cords of Comparative Examples 1 to 3 were prepared substantially according to the same method as in Example 1, except that the melt viscosity of the PET polymer at 290°C and at a shear rate of 1000 s$^{-1}$, the spinneret hole area of the spinneret, the discharge pressure of the PET polymer from the spinneret, the spinning speed, the monofilament fineness, and the drawing ratio were changed in the preparation process of the PET drawn fiber as in the following Table 1.

The conditions for the preparation process of the PET drawn fibers, which were applied to Examples 1 to 5 and Comparative Examples 1 to 3, are shown in the following Table 1.

[Table 1]

| Conditions | Spinneret hole area (mm$^2$/De) | Melt viscosity (poise) | Discharge pressure(psi) | Spinning speed (m/min) | Drawing ratio | Monofilament fineness(denier) |
|---|---|---|---|---|---|---|
| Example 1 | 0.3 | 3200 | 1800 | 3500 | 1.67 | 2.6 |
| Example 2 | 0.3 | 3500 | 2300 | 3550 | 1.65 | 2.6 |
| Example 3 | 0.3 | 4500 | 2700 | 3650 | 1.6 | 2.6 |
| Example 4 | 0.25 | 3500 | 2600 | 3550 | 1.65 | 3 |
| Example 5 | 0.35 | 3500 | 2000 | 3600 | 1.62 | 2.3 |
| Comparative Example 1 | 0.15 | 3500 | 3300 | 3400 | 1.72 | 4 |
| Comparative Example 2 | 0.3 | 6000 | 3500 | 3300 | 1.71 | 2.6 |
| Comparative Example 3 | 0.3 | 2000 | 1400 | 3500 | 1.6 | 2.6 |

SI unit conversions for Table 1:

Spinneret hole area:

0.27 mm2/dtex (0.3 mm2/De)

0.23 mm2/dtex (0.25 mm2/De)

0.32 mm2/dtex (0.35 mm2/De)

0.13 mm2/dtex (0.15 mm2/De)

Melt Viscosity:

Pa·s (poise) 320 Pa·s (3200 poise)

450 Pa·s (4500 poise)

600 Pa·s (6000 poise)

200 Pa·s (2000 poise)

Discharge Pressure:

MPa (psi)

12.4 MPa (1800 psi)

15.8 MPa (2300 psi)

18.6 MPa (2700 psi)

17.9 MPa (2600 psi)

22.7 MPa (3300 psi)

24.1 MPa (3500 psi)

9.6 MPa (1400 psi)

Monofilament fineness:

dtex (denier)
2.9 dtex (2.6 denier)
3.3 dtex (3 denier)
2.6 dtex (2.3 denier)
4.4 dtex (4 denier)

**[Measurement of physical properties of drawn fiber]**

Physical properties of the drawn fibers according to Examples 1~5 and Comparative Examples 1~3 were measured by the following methods.

1) L/S (kg/%): each drawn fiber was heat treated at a temperature of 180°C and under an initial load of 0.018 g/dtex (0.02 g/d), for 2 minutes using a shrinkage behavior tester (also used for measurement of dry heat shrinkage rate; manufacturer: TESTRITE, model: MK-V), and then LASE (kg) was measured using a universal tensile tester in accordance with standard ASTM D885. A dry heat shrinkage rate was also measured while the drawn fiber heat-treated for 2 minutes was maintained in an oven at 180°C without the initial load. FIG. 2 is a schematic view illustrating a structure of a shrinkage behavior tester used for measuring dry heat shrinkage rate. As a result of the measurement, an L/S value defined as the following Equation 1 was calculated.

$$[\text{Equation 1}]$$

$$L/S = LASE(kg)/\text{shrinkage rate}(\%)$$

wherein LASE (kg) represents Load at Specific Elongation when elongation of the drawn fiber is 5%, after heat treatment for 2 minutes, and shrinkage rate (%) represents a dry heat shrinkage rate measured while the drawn fiber is maintained at the temperature of 180°C without the initial load, after heat treatment for 2 minutes.

2) Tensile strength g/dtex: the strength of the fiber was measured using a universal strength tester in accordance with standard ASTM D885.

3) Intermediate elongation (%) and Breaking elongation (%): the intermediate elongation and breaking elongation were measured under a load of 4.5 g/de using a universal strength tester in accordance with standard ASTM D885.

4) Coefficient of variation (C.V%): the coefficient of variation was measured using an AnalySIS TS Auto 5.1 program of Olympus Soft Imaging Solutions.

The physical properties of the PET drawn fibers according to Examples 1~5 and Comparative Examples 1~3, measured as above, are shown in the following Table 2.

[Table 2]

| Conditions | L/S (kg/%) | Strength (g/d) | Intermediate elongation@4. 5g/d (%) | Breaking elongation (%) | Coefficient of variation (%) |
|---|---|---|---|---|---|
| Example 1 | 2.2 | 8.0 | 5.2 | 10.7 | 6.5 |
| Example 2 | 2.7 | 8.2 | 5.4 | 11.3 | 6.3 |
| Example 3 | 2.9 | 8.3 | 5.5 | 11.6 | 5.8 |
| Example 4 | 2.8 | 7.8 | 5.7 | 11.8 | 5.9 |
| Example 5 | 2.4 | 8.3 | 5.4 | 11.1 | 6.6 |
| Comparative Example 1 | 1.8 | 7.5 | 5.6 | 12.1 | 5.5 |
| Comparative Example 2 | 1.6 | 7.8 | 5.7 | 12.5 | 5.4 |
| Comparative Example 3 | 1.2 | 6.7 | 5.8 | 13.7 | 7.3 |

SI unit conversions for Table 2:

strength g/dtex (g/d)
7.2 g/dtex (8.0 g/d)
7.3 g/dtex (8.2 g/d)
7.4 g/dtex (8.3 g/d)
7.0 g/dtex (7.8 g/d)
6.7 g/dtex (7.5 g/d)

Intermediate elongation@4.05 g/dtex (4.5 g/d) (%)

4.6 g/dtex (5.2 g/d)
4.8 g/dtex (5.4 g/d)
4.9 g/dtex (5.5 g/d)
5.1 g/dtex (5.7 g/d)
5.0 g/dtex (5.6 g/d)

As shown in Tables 1 and 2, those of Comparative Examples 1 to 3 were prepared under the conditions of the melt viscosity of the PET polymer, the spinneret hole area of the spinneret, the discharge pressure or the monofilament fineness which are different from those of Examples. Comparative Examples 1 to 3 did not satisfy the L/S value of 2.0 kg/% or more, and thus their dimensional stability was unsatisfactory and the strength of the drawn fiber was poor or fiber quality was poor, leading to deterioration in processability.

In Comparative Example 2, the PET polymer having a high melt viscosity was applied and thus the discharge pressure was excessively increased upon spinning, which is likely to cause breakage and a reduction in physical properties. In addition, the high spinning temperature of 300°C for preventing the pressure increase caused a reduction in dimensional stability due to polymer degradation at high temperature.

In Comparative Example 3, the PET polymer having a low melt viscosity was applied and spun, resulting in low strength of the PET drawn fiber and poor dimensional stability and coefficient of variation.

In contrast, the PET drawn fibers of Examples 1 to 5 satisfied the L/S value of 2.0 kg/% or more to exhibit excellent dimensional stability, excellent strength, and proper intermediate elongation and breaking elongation.

[Measurement of physical properties of tire-cord]

Physical properties of the tire-cords according to Examples 1 to 5 and Comparative Examples 1 and 2 were measured by the following methods, and the measured physical properties are shown in the following Table 3.
1) Tensile strength g/dtex (g/d): the strength of the cord was measured using a universal strength tester in accordance with standard ASTM D885.
2) Intermediate elongation (%) and Breaking elongation (%): the intermediate elongation and breaking elongation were measured under a load of 2.025 g/dtex (2.25 g/d) using a universal strength tester in accordance with standard ASTM D885.

3) Dry heat shrinkage ratio (%): a dry heat shrinkage rate after 2 minutes at a temperature of 180°C and under a load of 0.009 g/dtex (0.01 g/ d) and a dry heat shrinkage rate after 2 minutes at a temperature of 180°C and under a load of 0.09 g/dtex (0.1 g/d) were measured using a shrinkage behavior tester (manufacturer: TESTRITE, model: MK-V) in accordance with standard ASDM D4974, respectively. In the same manner, a dry heat shrinkage rates after 2 minutes at a temperature of 180°C and under a load 0.045 g/dtex and 0.10 g/dtex (0.05 g/d and 0.113 g/d) were measured, respectively. FIG. 2 is a schematic view illustrating a structure of a shrinkage behavior tester used for measuring dry heat shrinkage rate.

4) PCI Index: PCI index was calculated from a difference between the dry heat shrinkage rate under a load of 0.009 g/dtex (0.01 g/d) and the dry heat shrinkage rate under a load of 0.09 g/dtex (0.1 g/d) measured by the above method.

[Table 3]

| | Strength (g/d) | Intermediate elongation (@4.5kg, %) | Breaking elongation (%) | Dry heat shrinkage rate(%) under load of 0.01 g/d | Dry heat shrinkage rate(%) under load of 0.05 g/d | Dry heat shrinkage rate (%) under load of 0.1 g/d | Dry heat shrinkage rate(%) under load of 0.113g/d | PCI Index (%) |
|---|---|---|---|---|---|---|---|---|
| Example 1 | 13.6 | 4.6 | 18.6 | 1.1 | 0.8 | 0.3 | 0.2 | 0.8 |
| Example 2 | 14.2 | 4.5 | 19.2 | 1 | 0.8 | 0.3 | 0.2 | 0.7 |
| Example 3 | 15.0 | 4.3 | 19.4 | 1.4 | 0.8 | 0.2 | 0.2 | 1.2 |
| Example 4 | 12.8 | 4.6 | 18.9 | 1.2 | 0.9 | 0.4 | 0.3 | 0.8 |
| Example 5 | 15.2 | 4.1 | 15.3 | 1.5 | 1 | 0.5 | 0.5 | 1 |
| Comparative Example 1 | 16.3 | 4.1 | 13.6 | 3.1 | 1.9 | 1 | 0.8 | 2.1 |
| Comparative Example 2 | 15.8 | 4.5 | 18.8 | 2.8 | 1.6 | 1 | 0.7 | 1.9 |

SI unit conversion for Table 3:

Strength g/dtex (g/d)
12.2 g/dtex (13.6 g/d)
12.8 g/dtex (14.2 g/d)
13.5 g/dtex (15.0 g/d)
11.5 g/dtex (12.8 g/d)
13.7 g/dtex (15.2 g/d)
14.7 g/dtex (16.3 g/d)
14.2 g/dtex (15.8 g/d)

Heading: Intermediate elongation@4.05 g/dtex (4.5 g/d) (%)
Headings: dry heat shrinkage rate (%) under loads of:

0.009 g/dtex (0.01 g/d)
0.045 g/dtex (0.05 g/d)
0.09 g/dtex (0.1 g/d)
0.10 g/dtex (0.113 g/d) to Tables 1 to 3, in Comparative Examples 1 and 2, the tire-cords showed a high dry heat shrinkage rate under a load of 0.009 g/dtex (0.01 g/d) due to poor dimensional stability and a high PCI Index, which is a difference from the dry heat shrinkage rate under a load of 0.009 g/dtex (0.01 g/d). Consequently, if a PCI process after tire vulcanization is omitted, uniformity and quality of the tire could be reduced.

In contrast, it was found that the tire-cords applied with the drawn fibers according to Examples 1 to 5 showed excellent strength and low PIC Index, and thus its dimensional stability was very excellent and additional PCI process was not required after tire vulcanization.

**Claims**

1.  A poly(ethyleneterephthalate) drawn fiber comprising a polymer including 90 mol% or more of poly(ethyleneterephthalate), and having a melt viscosity, measured and confirmed using a rheometer of RHEO-TESTER 2000, of 320 to 450 Pa·s (3200 to 4500 poise) at 290°C at a shear rate of 1000 s$^{-1}$,
    wherein the poly(ethyleneterephthalate) drawn fiber has a total fineness of 1111.11 to 4444.44 dtex (1000 to 4000 denier), and a monofilament fineness of 2 to 3.89 dtex (1.8 to 3.5 denier),
    wherein its tensile strength is 6.3 g/dtex (7.0 g/d) or more, its intermediate elongation is 4.0 to 6.5%, its breaking elongation is 10.0 to 20.0% under a load of 4.05 g/dtex (4.5 g/d), (both measured under a load of 4.05 dtex (4.5 g/d) using a universal strength tester in accordance with standard ASTM D885),
    wherein its L/S value defined as the following Equation is 2.1 kg/% to 3.5 kg/% after heat treatment at a temperature of 180°C under an initial load of 0.018 g/dtex (0.02 g/d) for 2 minutes:

$$[\text{Equation 1}]$$
$$\text{L/S = LASE (kg)/shrinkage rate (\%)}$$

    wherein LASE (kg) represents Load at Specific Elongation when elongation of the drawn fiber is 5%, after heat treatment for 2 minutes, and shrinkage rate (%) represents a dry heat shrinkage rate measured while the drawn fiber is maintained at the temperature of 180°C without the initial load, after heat treatment for 2 minutes.

2.  A method for manufacturing a poly(ethyleneterephthalate) drawn fiber, comprising the steps of:

    melt-spinning a polymer including 90 mol% or more of poly(ethyleneterephthalate) and having a melt viscosity, measured and confirmed using a rheometer of RHEO-TESTER 2000, of 320 to 450 Pa·s (3200 to 4500 poise) at 290°C at a shear rate of 1000 s$^{-1}$, through a spinneret having a hole area of 0.21 to 0.32 mm$^2$/dtex (0.23 to 0.35 mm$^2$/d) at a speed of 3000 to 4000 m/min 12 862 423.6 16.04.2019 so as to produce an undrawn fiber; and
    drawing the undrawn fiber with a drawing ratio of 1.5 to 1.8 times, and
    wherein a drawn fiber having a monofilament fineness of 2 to 3.89 dtex (1.8 to 3.5 denier) is produced in the drawing step.

3. The method according to claim 2, wherein a discharge pressure of the polymer passed through the spinneret is 10.34 MPa to 20.69 MPa (1500 to 3000 psi) in the melt-spinning step.

4. The method according to claim 2, wherein in the melting-spinning step, the polymer is discharged through the spinneret, and then passed through a warming section of 60 to 120 mm and a quenching section, and melt-spun with a speed of 3000 to 4000 m/min.

5. A poly(ethyleneterephthalate) tire-cord comprising a polymer including 90 mol% or more of poly(ethyleneterephthalate) and having a melt viscosity, (measured and confirmed using a rheometer of RHEO-TESTER 2000), of 320 to 450 Pa s (3200 to 4500 poise) at 290°C and at a shear rate of 1000 s$^{-1}$ and having a PCI index of 0.3% to 1.3%, wherein the PCI index is defined as a difference between a dry heat shrinkage rate after heat treatment at 180°C for 2 minutes under a load of 0.009 g/dtex (0.01 g/d) and a dry heat shrinkage rate after heat treatment at 180°C for 2 minutes under a load of 0.09 g/dtex (0.1 g/d),
wherein it has a total fineness of 2222.22 to 8888.89 dtex (2000 to 8000 denier), a tensile strength (measured under a load of 2.025 g/dtex (2.25 g/d) using a universal strength tester in accordance with standard ASTM D885), of 8,1 to 15.3 g/dtex (9.0 to 17.0 g/d), an intermediate elongation of 3.0 to 5.5%, and a breaking elongation of 10.0% or more under a load of 2.03 g/dtex (2.25 g/d) (both measured under a load of 4.05 dtex (4.5 g/d) using a universal strength tester in accordance with standard ASTM D885).

6. The poly(ethyleneterephthalate) tire-cord according to claim 5, wherein the dry heat shrinkage rate after heat treatment at 180°C for 2 minutes under a load of 0.009 g/dtex (0.01 g/d) is 1.5% or less.

7. The poly(ethyleneterephthalate) tire-cord according to claim 5, wherein the dry heat shrinkage rate after heat treatment at 180°C for 2 minutes under a load of 0.009 g/dtex (0.01 g/d) is 1.0% or less.

8. The poly(ethyleneterephthalate) tire-cord according to claim 5, wherein it is used as a body ply cord for a pneumatic tire.

9. A method for manufacturing a poly(ethyleneterephthalate) tire-cord, comprising the steps of:

producing a poly(ethyleneterephthalate) drawn fiber by the method according to claim 2;
twisting the drawn fibers; and
dipping the twisted fibers in an adhesive solution, followed by heat treatment.

10. The method according to claim 9, wherein the heat treatment is carried out at a temperature of 220 to 260°C for 90 to 360 seconds.

11. The method according to claim 9 or clam 10, wherein the heat treatment is carried out under a tension of 0.028 to 1.104 kg/m$^3$ (0.1 kg/cord to 4.0 kg/cord).

**Patentansprüche**

1. Gezogene Poly(ethylenterephthalat)-Faser, umfassend ein Polymer, das 90 Mol-% oder mehr Poly(ethylenterephthalat)enthält, und das eine Schmelzviskosität von 320 bis 450 Pa·s (3200 bis 4500 Poise) bei 290 °C bei einer Schergeschwindigkeit von 1000 s$^{-1}$ aufweist, gemessen und bestätigt durch ein Rheometer von RHEO-TESTER 2000,
wobei die gezogene Poly(ethylenterephthalat)-Faser eine Gesamtfeinheit von 1111,11 bis 4444,44 dtex (1000 bis 4000 Denier) und eine Einzelfadenfeinheit von 2 bis 3,89 dtex (1,8 bis 3,5 Denier) aufweist,
wobei ihre Zugfestigkeit 6,3 g/dtex (7,0 g/d) oder mehr beträgt, ihre mittlere Dehnung 4,0 bis 6,5 % beträgt, ihre Bruchdehnung unter einer Belastung von 4,05 g/dtex (4,5 g/d) 10,0 bis 20,0 % beträgt (jeweils gemessen unter einer Belastung von 4,05 g/dtex (4,5 g/d) mit einem Universalfestigkeitsprüfer in Übereinstimmung mit ASTM D885), wobei ihr L/S-Wert, der als die folgende Gleichung definiert ist, nach einer Wärmebehandlung bei einer Temperatur von 180 °C unter einer Vorlast von 0,018 g/dtex (0,02 g/d) für 2 Minuten 2,1 kg/% bis 3,5 kg/% beträgt:

[Gleichung 1]

$$L/S = LASE \ (kg)/Schrumpfungsrate \ (\%)$$

wobei LASE (kg) die Belastung bei einer bestimmten Dehnung (Load at Specific Elongation) darstellt, wenn die Dehnung der gezogenen Faser nach einer Wärmebehandlung für 2 Minuten 5 % beträgt, und die Schrumpfungsrate (%) eine Schrumpfungsrate bei trockener Hitze darstellt, die gemessen wird, während die gezogene Faser nach der Wärmebehandlung für 2 Minuten ohne Vorlast bei der Temperatur von 180 °C gehalten wird.

2. Verfahren zur Herstellung einer gezogenen Poly(ethylenterephthalat)-Faser, umfassend die Schritte des:

Schmelzspinnens eines Polymers, das 90 Mol-% oder mehr eines Poly(ethylenterephthalats) enthält, und eine Schmelzviskosität von 320 bis 450 Pa·s (3200 bis 4500 Poise) bei 290 °C bei einer Schergeschwindigkeit von 1000 s$^{-1}$ aufweist, gemessen und bestätigt durch ein Rheometer von RHEO-TESTER 2000, durch eine Spinndüse, die eine Lochfläche von 0,21 bis 0,32 mm$^2$/dtex (0,23 bis 0,35 mm$^2$/d) aufweist bei einer Geschwindigkeit von 3000 bis 4000 m/Min., um eine ungezogene Faser herzustellen; und
Ziehen der ungezogenen Faser mit einem Zugverhältnis von 1,5- bis 1,8-fach, und wobei eine gezogene Faser, die eine Einzelfadenfeinheit von 2 bis 3,89 dtex (1,8 bis 3,5 Denier) aufweist, in dem Zugschritt hergestellt wird.

3. Verfahren nach Anspruch 2, wobei in dem Schmelzspinnschritt ein Entladungsdruck des Polymers von 10,34 MPa bis 20,69 MPa (1500 bis 3000 Psi) durch die Spinndüse tritt.

4. Verfahren nach Anspruch 2, wobei das Polymer in dem Schmelzspinnschritt durch die Spinndüse entladen wird, und anschließend durch einen Wärmebereich von 60 bis 120 mm und durch einen Abschreckbereich geführt, und bei einer Geschwindigkeit von 3000 bis 4000 m/Min. schmelzgesponnen wird.

5. Poly(ethylenterephthalat)-Reifencord, umfassend ein Polymer, das 90 Mol-% oder mehr Poly(ethylenterephthalat) enthält, und das eine Schmelzviskosität von 320 bis 450 Pa·s (3200 bis 4500 Poise) bei 290 °C und bei einer Schergeschwindigkeit von 1000 s$^{-1}$ aufweist (gemessen und bestätigt durch ein Rheometer von RHEO-TESTER 2000), und das einen PCI-Index von 0,3 % bis 1,3 % aufweist, wobei der PCI-Index als eine Differenz zwischen einer Schrumpfungsrate bei trockener Hitze nach einer Wärmebehandlung bei 180 °C für 2 Minuten unter einer Belastung von 0,009 g/dtex (0,01 g/d) und einer Schrumpfungsrate bei trockener Hitze nach einer Wärmebehandlung bei 180 °C für 2 Minuten unter einer Belastung von 0,09 g/dtex (0,1 g/d) definiert ist, wobei eine Gesamtfeinheit von 2222,22 bis 8888,89 dtex (2000 bis 8000 Denier), eine Zugfestigkeit (gemessen unter einer Belastung von 2,025 g/dtex (2,25 g/d) mit einem Universalfestigkeitsprüfer in Übereinstimmung mit Standard ASTM D885) von 8,1 bis 15,3 g/dtex (9,0 bis 17,0 g/d), eine mittlere Dehnung von 3,0 bis 5,5 % und eine Bruchdehnung von 10,0 % oder mehr unter einer Belastung von 2,03 g/dtex (2,25 g/d) (jeweils gemessen unter einer Belastung von 4,05 dtex (4,5 g/d) mit einem Universalfestigkeitsprüfer in Übereinstimmung mit Standard ASTM D885) beträgt.

6. Poly(ethylenterephthalat)-Reifencord nach Anspruch 5, wobei die Schrumpfungsrate bei trockener Hitze nach einer Wärmebehandlung bei 180 °C für 2 Minuten unter einer Belastung von 0,009 g/dtex (0,01 g/d) 1,5 % oder weniger beträgt.

7. Poly(ethylenterephthalat)-Reifencord nach Anspruch 5, wobei die Schrumpfungsrate bei trockener Hitze nach einer Wärmebehandlung bei 180 °C für 2 Minuten unter einer Belastung von 0,009 g/dtex (0,01 g/d) 1,0 % oder weniger beträgt.

8. Poly(ethylenterephthalat)-Reifencord nach Anspruch 5, wobei er als Unterbaulagencord für einen Luftreifen verwendet wird.

9. Verfahren zur Herstellung eines gezogenen Poly(ethylenterephthalat)-Reifencords, umfassend die Schritte des:

Herstellen einer gezogenen Poly(ethylenterephthalat)-Faser durch das Verfahren nach Anspruch 2;
Verdrehen der gezogenen Fasern; und
Eintauchen der verdrehten Fasern in eine Klebstofflösung, gefolgt von einer Wärmebehandlung.

10. Verfahren nach Anspruch 9, wobei die Wärmebehandlung bei einer Temperatur von 220 bis 260 °C für 90 bis 360 Sekunden durchgeführt wird.

11. Verfahren nach Anspruch 9 oder 10, wobei die Wärmebehandlung unter einer Spannung von 0,028 bis 1,104 kg/m$^3$ (0,1 kg/Cord bis 4,0 kg/Cord) durchgeführt wird.


**Revendications**

1. Une fibre étirée en poly(éthylène téréphtalate) comprenant un polymère comprenant 90 % en moles ou plus de poly(éthylène téréphtalate), et ayant une viscosité à la fusion, mesurée et confirmée en utilisant un rhéomètre de RHEO-TESTER 2000, de 320 à 450 Pa · s (3200 à 4500 poise) à 290°C et à un taux de cisaillement de 1000 s$^{-1}$, dans laquelle la fibre étirée en poly(éthylène téréphtalate) a une finesse totale de 1111,11 à 4444,44 dtex (1000 à 4000 denier), et une finesse de monofilament de 2 à 3,89 dtex (1,8 à 3,5 denier), dans laquelle sa charge de rupture est de 6,3 g/dtex (7,0 g/d) ou plus, son allongement intermédiaire est de 4,0 à 6,5 %, son allongement à la rupture est de 10,0 à 20,0 % sous une charge de 4,05 g/dtex (4,5 g/d) (les deux mesurés sous une charge de 4,05 dtex (4,5 g/d) en utilisant un appareil d'essais de force universelle en accord avec le standard ASTM D885), dans laquelle sa valeur L/S définie comme étant l'équation suivante est de 2,1 à 3,5 kg / % ou plus après traitement thermique à une température de 180°C sous une charge initiale de 0,0118 g/dtex (0,02 g/d) pendant 2 minutes:

$$[\text{equation 1}]$$

$$\text{L/S} = \text{LASE (kg)/taux de retrait (\%)}$$

dans laquelle LASE (kg) représente la charge à l'allongement spécifique lorsque l'allongement de la fibre étirée est de 5%, après un traitement thermique de 2 minutes, et le taux de retrait (%) représente un taux de retrait à la chaleur sèche mesuré tandis que la fibre étirée est maintenue à la température de 180°C sans la charge initiale, après traitement thermique pendant 2 minutes.

2. Un procédé de fabrication d'une fibre étirée en poly(éthylène téréphtalate) comprenant les étapes consistant à:

filer à l'état fondu un polymère comprenant 90% en moles ou plus de poly(éthylène téréphtalate) et ayant une viscosité à l'état fondu, mesurée et confirmée en utilisant un rhéomètre de RHEO-TESTER 2000, de 320 à 450 Pa · s (3200 à 4500 poise) à 290°C et à un taux de cisaillement de 1000 s$^{-1}$, à travers une filière ayant une surface de trou de 0,21 à 0,32 mm$^2$/dtex (0,23 à 0,35 mm$^2$/d) à une vitesse de 3000 à 4000 m/min, de manière à produire une fibre non étirée; et
étirer la fibre non étirée avec un rapport d'étirage de 1,5 à 1,8 fois, et
dans lequel le une fibre étirée ayant une finesse de monofilament de 2 à 3,89 dtex (1,8 à 3,5 denier) est produit à l'étape d'étirage.

3. Le procédé selon la revendication 2, dans lequel une pression de décharge du polymère passé à travers la filière est de 10,34 MPa à 20,69 MPa (1500 à 3000 psi) dans l'étape de filage à l'état fondu.

4. Le procédé selon la revendication 2, dans lequel dans l'étape de fusion-filage, le polymère est déchargé à travers la filière, puis passé à travers une section de réchauffement de 60 à 120 mm et une section de refroidissement, et filé à l'état fondu à une vitesse de 3000 à 4000 m/min.

5. Une corde de pneu en poly(éthylène téréphtalate) comprenant un polymère comprenant 90% en moles ou plus de poly(éthylène téréphtalate), et ayant une viscosité à la fusion, mesurée et confirmée en utilisant un rhéomètre de RHEO-TESTER 2000, de 320 à 450 Pa · s (3200 à 4500 poise) à 290°C et à un taux de cisaillement de 1000 s$^{-1}$, et ayant un indice PCI de 0,3% à 1,3%, l'indice PCI étant défini comme étant la différence entre un taux de retrait à la chaleur sèche après traitement thermique à 180°C pendant 2 minutes sous une charge de 0,009 g/dtex (0,01 g/d) et un taux de retrait thermique après traitement thermique à 180°C pendant 2 minutes sous une charge de 0,09 g/dtex (0,1 g/d), dans laquelle elle a une finesse totale de 2222,22 à 8888,89 dtex (2000 à 8000 denier), une charge à la rupture (mesurée sous une charge de 2,025 g/dtex (2,25 g/d) en utilisant un appareil d'essais de force universel en accord avec le standard ASTM D885) mesurée de 8,1 à 15,3 g/dtex (9,0 à 17,0 g/d), un allongement intermédiaire de 3,0 à 5,5%, et un allongement à la rupture de 10,0% ou plus sous une charge de 2,03 g/dtex (2,25 g/d) (les deux mesurés sous une charge de 4,05 dtex (4,5 g/d) en utilisant un appareil d'essais de force universelle en accord avec le standard ASTM D885).

6. La corde de pneu en poly(éthylène téréphtalate) selon la revendication 5, dans laquelle le taux de retrait à la chaleur sèche après traitement thermique à 180°C pendant 2 minutes sous une charge de 0,009 g/dtex (0,01 g/d) est égal ou inférieur à 1,5%.

7. La corde de pneu en poly(éthylène téréphtalate) selon la revendication 5, dans laquelle le taux de retrait à la chaleur sèche après traitement thermique à 180°C pendant 2 minutes sous une charge de 0,009 g/dtex (0,01 g/d) est égal ou inférieur à 1,0%.

8. La corde de pneu en poly(éthylène téréphtalate) selon la revendication 5, dans laquelle elle est utilisée comme une nappe de corps pour un pneumatique.

9. Un procédé de fabrication d'un cordon de pneumatique en poly(éthylène téréphtalate) comprenant les étapes consistant à:

produire une fibre étirée en poly(éthylène téréphtalate) par le procédé selon la revendication 2;
tordre les fibres étirées; et
tremper les fibres torsadées dans une solution adhésive, suivi par un traitement thermique.

10. Le procédé selon la revendication 9, dans lequel le traitement thermique est effectué à une température de 220 à 260°C pendant 90 à 360 secondes.

11. Le procédé selon la revendication 9 ou la revendication 10, dans lequel le traitement thermique est effectué sous une tension de 0,028 à 1,104 kg/m$^3$ (0,1 kg/cordon à 4,0 kg/cordon).

**【FIG. 1】**

**【FIG. 2】**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20070060370